# FASCICULE DE BREVET EUROPEEN

(11) **EP 2 475 509 B1**
(45) Date de publication et mention de la délivrance du brevet: **23.10.2013**
(21) Numéro de dépôt: 10747053.6
(22) Date de dépôt: 30.08.2010
(51) Int. Cl.: B29C 49/48, B29C 33/30

(54) **DISPOSITIF DE MOULAGE PAR SOUFFLAGE EQUIPE DE MOYENS DE FIXATION D'UN DEMI-MOULE PAR ASPIRATION CONTRE LE FOND D'UN LOGEMENT ASSOCIE D'UN PORTE-MOULE**
BLASFORMVORRICHTUNG MIT FORMHÄLFTEBEFESTIGUNG IN DEN FORMHÄLTERN DURCH VAKUUM
BLOW-MOLDING DEVICE PROVIDED WITH MEANS FOR ATTACHING, BY SUCTION, A HALF-MOLD TO A BACK WALL OF A CORRESPONDING RECESS OF A MOLD CARRIER

(30) Priorité: 07.09.2009 FR 0956074
(43) Date de publication de la demande: 18.07.2012
(73) Titulaire: Sidel Participations, 76930 Octeville sur Mer (FR)
(72) Inventeur: BLANCHARD, José, F-76930 Octeville-sur-Mer (FR)
(74) Mandataire: Martin, Franck-Olivier
(86) Numéro de dépôt international: PCT/EP2010/062622
(87) Numéro de publication internationale: WO 2011/026803

(56) Documents cités:
- EP-A1- 1 880 826
- US-A- 5 552 098
- US-A1- 2007 269 545
- DATABASE WPI Week 200322 Thomson Scientific, London, GB; AN 2003-224334 XP002600208 -& JP 2002 307445 A (AISIN TAKAOKA KK) 23 octobre 2002 (2002-10-23)
- DATABASE WPI Week 200568 Thomson Scientific, London, GB; AN 2005-661011 XP002600209 -& JP 2005 246634 A (TOMITA KK) 15 septembre 2005 (2005-09-15)

## Description

La présente invention concerne un dispositif de moulage pour une machine de fabrication de récipients, notamment des bouteilles.

La présente invention concerne plus particulièrement un dispositif de moulage pour une machine de fabrication de récipients, notamment des bouteilles, en matière thermoplastique par soufflage ou étirage-soufflage d'une préforme préalablement chauffée, le dispositif de moulage comportant :
- deux demi-moules dont chacun est pourvu d'une demi-empreinte et dont chacun comporte une face de joint et une face externe ;
- deux porte-moules dont chacun est muni d'un logement destiné à recevoir un demi-moule associé dans une position montée dans laquelle la face externe du demi-moule est en contact avec le fond du logement ; et
- des moyens de fixation aptes à fixer de manière démontable chaque demi-moule dans le logement du porte-moule associé.

On connaît de l'état de la technique des dispositifs de moulage destinés à équiper des machines de fabrication de récipients, notamment mais non exclusivement des machines dites "rotatives" comportant un carrousel circonférentiellement pourvu d'un nombre déterminé de postes de soufflage identiques.

La fabrication de récipients en matière plastique, tels que des bouteilles, flacons, etc. y est effectuée à partir de préformes ou d'ébauches préalablement chauffées dans un four de conditionnement thermique. Selon le nombre d'empreinte des moules, au moins une préforme est ainsi amenée à un poste de la machine pour être introduite dans un dispositif de moulage auquel sont associés des moyens de soufflage ou d'étirage-soufflage.

De tels dispositifs de moulage comportent au moins un moule constitué de deux demi-moules supportés respectivement par deux porte-moules qui sont montés mobiles l'un par rapport à l'autre.

Chaque demi-moule est généralement fixé à un porte-moule associé de manière amovible par l'intermédiaire de moyens de fixation afin de permettre un démontage en vue d'un changement de moule, en particulier pour procéder à des fabrications de récipients de formes et/ou de dimensions différentes ou encore à leur remplacement en cas d'endommagement et/ou d'usure des demi-moules.

Pour réduire tant les coûts de fabrication que le temps nécessaire à un tel démontage du moule, on a déjà proposé dans le document EP-B1-0.821.641 différents perfectionnements aux dispositifs de moulage.

Selon les enseignements de ce document, des moyens de régulation de la température des empreintes de chaque demi-moule sont réalisés en une pièce distincte (appelée porte-coquille dans ce document) du demi-moule (appelé coquille dans ce document). Le porte-coquille est destiné à être porté à demeure par le porte-moule, tandis que le demi-moule (ou coquille) muni de la demi-empreinte est apte à être solidarisé de manière amovible au porte-coquille par l'intermédiaire de moyens de fixation. Cette configuration permet d'obtenir un demi-moule léger facilement manipulable par un opérateur seul.

Les moyens de fixation du demi-moule sur le porte-moule sont disposés sur les bords respectifs du demi-moule et du porte-coquille qui sont parallèles à l'axe principal de l'empreinte. Ces moyens de fixation comportent en particulier des moyens de vissage rapide d'une barre de serrage sur une face de joint du porte-coquille. La barre de serrage comporte des pattes de serrage débordant sur la face de joint du demi-moule pour assurer la fixation du demi-moule solidairement au porte-coquille.

Des autres moyens de fixation des moules sur porte-moules sont proposés dans les documents US 2007 0269545, US 5552098, JP 2002 307445 et JP 2005 246634.

Avec les moyens de fixation connus, les opérations de montage et de démontage sont mises en oeuvre par au moins un opérateur et requièrent l'utilisation d'outils, tels que des tournevis ou de clés 6 pans, pour agir sur les moyens de fixation pendant que les porte-moules sont en position ouverte.

Cependant, on cherche à réduire encore le temps nécessaire au montage et/ou au démontage des demi-moules (ou coquilles dans le document précité) de manière à réduire encore les temps d'intervention.

Dans ce but, l'invention propose un dispositif de moulage du type décrit précédemment, caractérisé en ce que les moyens de fixation sont des moyens commandés par attraction du demi-moule contre le fond du logement du porte-moule.

Selon d'autres caractéristiques de l'invention :
- le demi-moule est destiné à être monté et démonté de son logement par un mouvement de translation orthogonal à la face de joint du demi-moule ;
- les moyens de fixation sont des moyens d'aspiration par effet de ventouse ;
- au moins une chambre étanche à l'air est réservée à l'interface entre le porte-moule et le demi-moule en position montée sur le porte-moule, la chambre étanche communiquant avec une source commandée de dépression par l'intermédiaire d'une conduite d'aspiration pour permettre la mise de la chambre étanche à une pression de fixation inférieure à la pression atmosphérique ;
- la chambre étanche est formée en partie par une cavité qui est formée dans la face externe du demi-moule ;
- la chambre étanche est formée au moins en partie par une cavité qui est formée dans le fond du logement du porte-moule ;
- l'étanchéité de la chambre étanche est réalisée par au moins un joint qui est porté par le demi-moule ;
- l'étanchéité de la chambre étanche est réalisée par au moins un joint qui est porté par le porte-moule ;
- le demi-moule comporte des moyens de positionnement sur le porte-moule ;
- les moyens de positionnement sont des moyens par emboîtement de formes de complémentaires entre le demi-moule et le porte-moule associés ;
- le demi-moule est équipé de moyens d'accrochage mécanique au porte-moule afin de permettre le maintien du demi-moule sur le porte-moule lors de l'arrêt des moyens commandés d'attraction.

D'autres caractéristiques et avantages apparaîtront à la lecture de la description détaillée qui va suivre pour la compréhension de laquelle on se reportera aux dessins annexés parmi lesquels :
- la figure 1 est une vue en perspective qui représente un dispositif de soufflage réalisé selon les enseignements de l'invention et comportant deux porte-moules munis de leur demi-moule ;
- la figure 2 est une vue en perspective qui représente les deux demi-moules de la figure 1 dans une position disjointe ;
- la figure 3 est une vue en perspective qui représente les deux demi-moules de la figure 2 en position jointe ;
- la figure 4 est une vue en perspective à plus grande échelle qui représente les deux porte-moules de la figure 1 dans une position ouverte ;
- la figure 5 est une vue similaire à celle de la figure 4 qui représente les deux porte-moules dans une position fermée ;
- la figure 6 est une vue en perspective éclatée qui représente un porte-moule ainsi qu'un demi-moule prêt à être inséré dans un logement du porte-moule selon la direction de montage indiquée par la flèche "F" ;
- la figure 7 est une vue en coupe réalisée selon le plan de coupe 7-7 de la figure 4 ;
- la figure 8 est une vue en perspective éclatée qui représente le logement d'un porte-moule équipé d'une cavité, ainsi qu'un joint d'étanchéité et une clavette ;
- la figure 9 est une vue en perspective qui représente la face externe d'un demi-moule ;
- la figure 10 est une vue en en coupe selon le plan de coupe 10-10 de la figure 4 qui représente des moyens d'accrochage d'un demi-moule dans son logement.

Pour la suite de la description, des éléments présentant des fonctions similaires, analogues ou identiques seront désignés par des mêmes numéros de référence.

Pour la suite de la description, on adoptera à titre non limitatif pour chaque porte-moule 34 des orientations longitudinale, verticale et transversale indiquées par le trièdre "L,V,T" aux figures. Les directions transversales "T" et longitudinale "L" sont ainsi fixes par rapport à chaque porte-moule 34. Pour chaque porte-moule 34, la direction transversale "T" est plus particulièrement orientée depuis l'extérieur du moule 12 vers l'intérieur du moule 12.

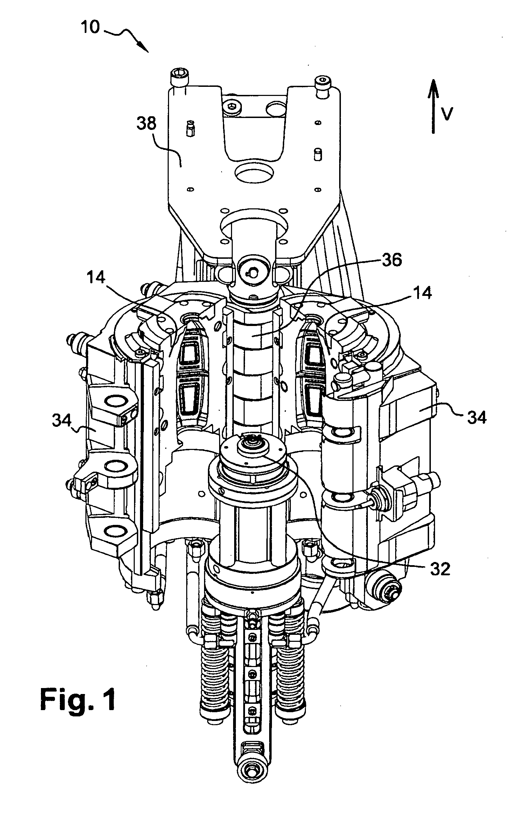

On a représenté à la figure 1, un dispositif de moulage 10 pour une machine (non représentée) de fabrication de récipients, en particulier des bouteilles, en matière thermoplastique par soufflage ou étirage-soufflage d'une préforme préalablement chauffée.

Le dispositif de moulage 10 représenté à la figure 1 ne constitue toutefois qu'un exemple de réalisation non limitatif du type de dispositif de moulage 10 susceptible de recevoir application de moyens de fixation réalisés selon les enseignements de l'invention.

Le dispositif de moulage 10 illustré à la figure 1 est plus particulièrement destiné à équiper un poste d'une machine de fabrication de type "rotative", c'est-à-dire comportant généralement un carrousel à la circonférence duquel sont disposés des postes comprenant chacun un dispositif de moulage 10 associé à des moyens de soufflage ou d'étirage-soufflage, encore appelé tuyère de soufflage.

Cependant, les moyens de fixation selon l'invention sont également susceptibles d'être mis en oeuvre dans une machine de fabrication de type linéaire (et non rotative).

S'agissant de moyens de soufflage ou d'étirage-soufflage, on se reportera par exemple au document FR-2.764.544 pour de plus amples détails.

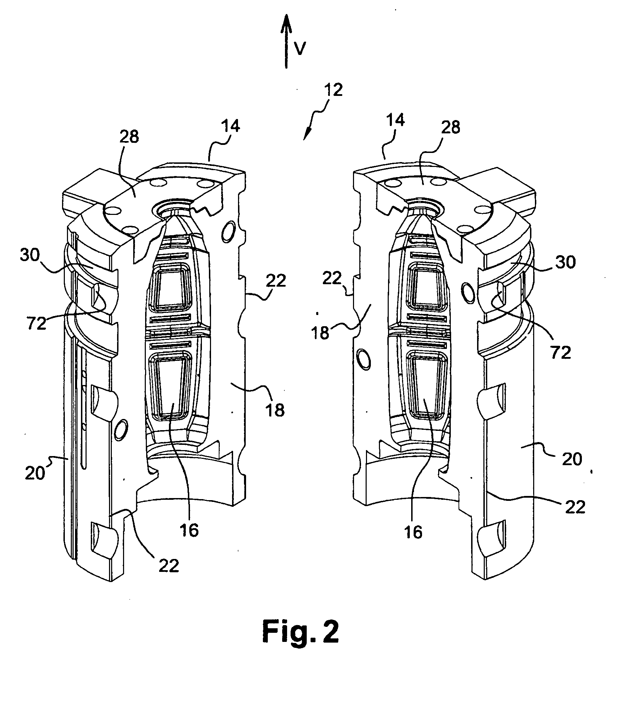

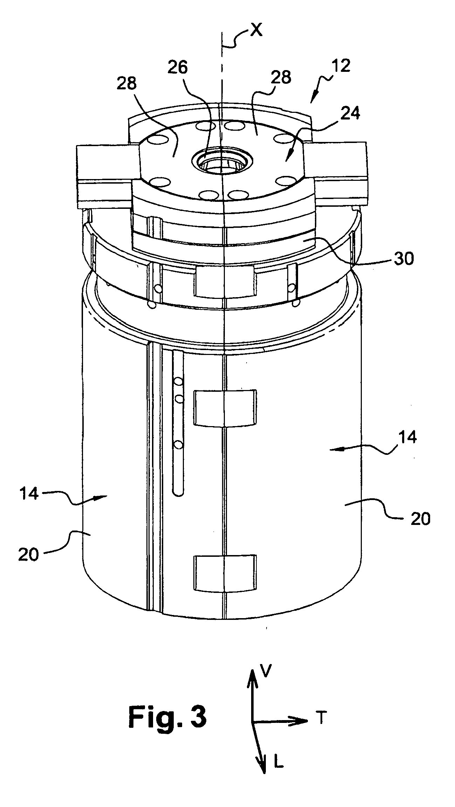

Comme on peut le voir en détail aux figures 2 et 3, le dispositif de moulage 10 comporte au moins un moule 12 constitué de deux demi-moules 14. Le moule 12 présente ici une forme cylindrique coupée axialement en deux parties pour former chaque demi-moule 14.

Chaque demi-moule 14 comporte une demi-empreinte 16 du récipient final qui est réalisée en creux dans une face 18 de joint. La face 18 de joint est ici une face plane verticale qui est formée par la face de section du cylindre formant le moule 12. Les faces 18 de joint se font faces l'une l'autre lorsque les demi-moule 14 sont en position jointe.

Chaque demi-moule 14 comporte en outre une face externe 20 qui est opposée à la face 18 de joint, et qui présente globalement la forme d'un demi-cylindre de révolution sensiblement coaxial à l'axe principal vertical X de l'empreinte 16 du récipient.

Chaque demi-moule 14 présente deux bords 22 ou arêtes rectilignes d'orientation verticale qui s'étendent à la jonction entre sa face 18 de joint et sa face externe 20.

Les demi-moules 14 sont susceptibles d'occuper une position disjointe, telle que représentée à la figure 2, dans laquelle les deux demi-moules 14 sont écartés l'un de l'autre, et une position jointe, telle que représentée à la figure 3, dans laquelle les deux demi-moules 14 sont joints ensemble par leur face 18 de joint pour former le moule 12.

Dans la position jointe, le moule 12 présente une face supérieure 24 horizontale circulaire présentant centralement une ouverture 26 destinée à permettre l'introduction de la préforme, voire d'une tige d'étirage.

De préférence, la face supérieure 24 de chaque demi-moule 14 est formée par une plaque 28 distincte, rapportée solidairement sur chaque demi-moule 14. L'extrémité inférieure d'une tuyère (non représentée) comprenant les moyens de soufflage ou d'étirage-soufflage est destinée à venir en contact avec la surface de la plaque 28.

Les demi-moules 14 comportent encore dans leur partie supérieure, juste en dessous de la face supérieure horizontale, une rainure 30 annulaire qui s'étend circonférentiellement de manière continue autour des deux demi-moules 14 lorsqu'ils sont joints.

Lorsque le récipient à fabriquer présente un fond de forme complexe, en particulier pétaloïde, des problèmes de démoulage sont alors susceptibles de survenir.

C'est la raison pour laquelle, on prévoit avantageusement alors un fond 32 de moule séparé, distinct des demi-moules 14, ledit fond 32 de moule comportant une empreinte du fond du récipient complémentaire des demi-empreintes 16. Un tel fond 32 de moule est représenté à la figure 1.

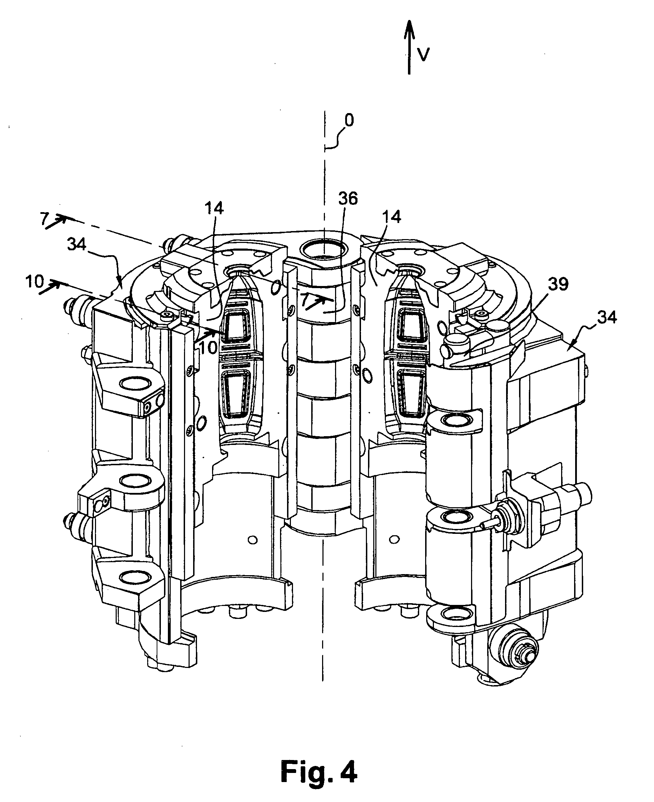

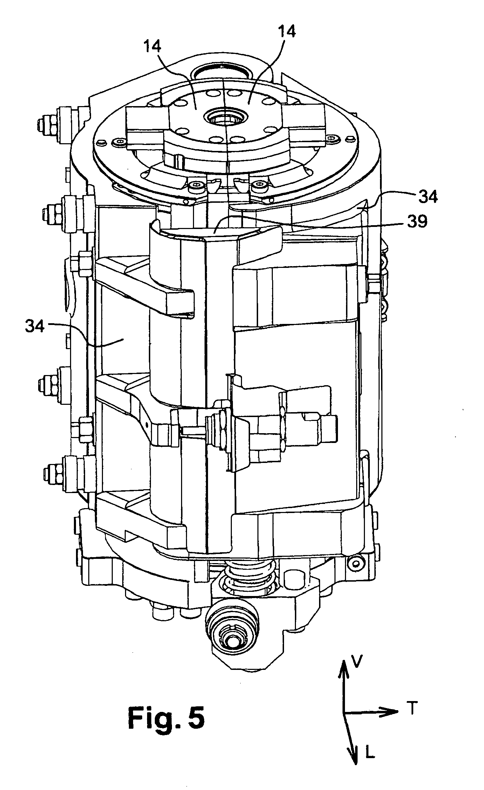

Chaque demi-moule 14 est destiné à être fixé de manière démontable sur un porte-moule 34 associé du dispositif de moulage 10. De telles porte-moules 34 sont représentés plus en détails aux figures 4 et 5.

Les deux porte-moules 34 sont montés mobiles l'un par rapport à l'autre entre une position fermée, telle que représentée à la figure 5, dans laquelle les deux demi-moules 14 sont joints pour former l'empreinte 16, et une position ouverte, telle que représentée à la figure 4, dans laquelle les deux demi-moules 14 sont disjoints, par exemple pour permettre l'éjection d'un récipient après soufflage.

Dans l'exemple représenté aux figures 1, 4 et 5, les porte-moules 34 sont constitués sous la forme de deux structures porteuses montées articulées autour d'une charnière 36 commune d'axe O de pivotement qui s'étend verticalement. Comme représenté à la figure 1, la charnière 36 est portée par une console 38 qui est fixe par rapport au carrousel (non représenté).

Les porte-moules 34 sont dès lors susceptibles de s'écarter mutuellement l'un de l'autre en pivotant respectivement autour de l'axe O et sont en conséquence montés pivotants entre leur position ouverte (figure 4) et leur position fermée (figure 5).

Comme représenté à la figure 5, lorsque les porte-moules 34 d'ouvrent depuis leur position fermée, ils commencent à s'écarter l'un de l'autre selon une direction transversale d'ouverture qui est orthogonale à la face 18 de joint des demi-moules 14.

En raison de la cinématique des porte-moules 34, un tel dispositif de moulage 10 est encore appelé moule "portefeuille" (ou *"book-like opening" en anglais).*

Selon une variante non représentée de l'invention, le dispositif de moulage comporte deux porte-moules 34 montés mobiles en translation l'un par rapport à l'autre selon une direction transversale, entre une position ouverte et une position fermée.

Le dispositif de moulage 10 comporte encore un verrou 39 qui est agencé longitudinalement en partie avant diamétralement à l'opposé de la charnière par rapport à l'axe vertical "X" de l'empreinte 16.

Un tel verrou 39 est également connu et ne sera donc pas décrit plus en détail. Ce verrou 39 présente notamment pour fonction de prévenir toute ouverture inopinée lors du soufflage pour lequel les pressions peuvent atteindre 30 à 40 bars selon les applications.

Pour de plus amples détails sur la structure et le fonctionnement d'un tel verrou 39, on pourra par exemple se reporter au document FR 2.646.802.

Par ailleurs, le porte-moule 34 est muni de moyens (non représentés) de régulation de la température de l'empreinte 16 qui sont constitués par des conduites formées dans l'épaisseur du porte-moule 34 et dans lesquelles circule un fluide caloporteur.

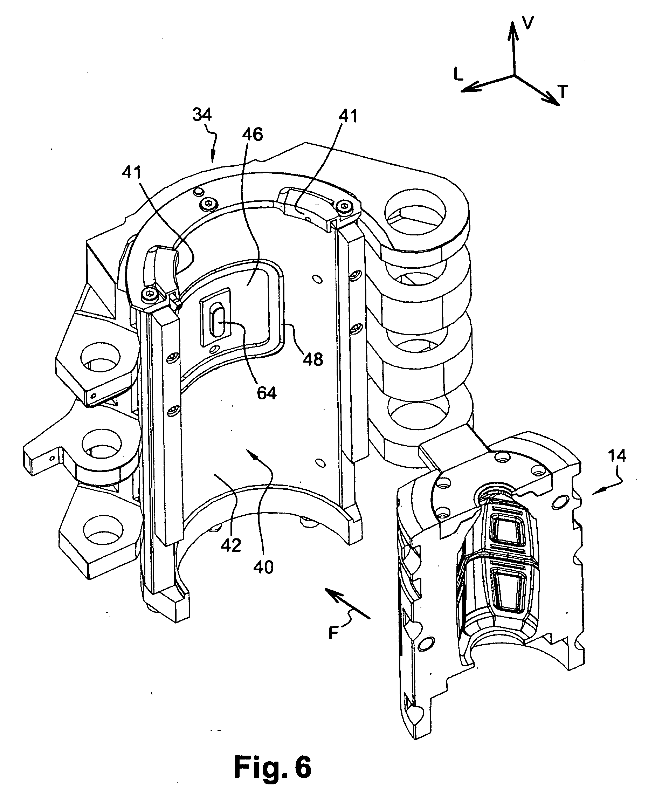

Comme représenté à la figure 6, chaque demi-moule 14 est plus particulièrement destiné à être reçu dans un logement 40 du porte-moule 34 associé pour occuper une position montée.

Le logement 40 du porte-moule 34 est conçu de manière que le demi-moule 14 soit monté et démonté de son logement 40 par un mouvement de translation parallèle à l'ouverture du moule 12 formé par les deux demi-moules 14. La direction de montage est ici orientée transversalement comme indiquée par la flèche "F".

Le dispositif de moulage 10 comporte des moyens de fixation qui sont aptes à fixer de manière démontable chaque demi-moule 14 en position montée dans le logement du porte-moule 34 associé. Ces moyens seront décrits plus en détail par la suite.

Le logement 40 est délimité transversalement vers l'extérieur par un fond 42 de forme semi-cylindrique complémentaire de la face externe 20 du demi-moule 14 de manière que la face externe 20 du demi-moule 14 et le fond 42 du logement 40 du porte-moule 34 soient en contact, plaqués l'un contre l'autre, pour permettre un transfert de chaleur par conduction thermique entre le demi-moule 14 et les moyens de régulation de la température du porte-moule 34.

En outre, le logement 40 est délimité verticalement vers le haut par la face inférieure d'un rebord 41 qui s'étend transversalement vers l'intérieur en saillie par rapport au fond 42 du logement 40, comme cela est illustré à la figure 6. Une face supérieure du demi-moule 14 est destinée à venir en contact avec ce rebord 41 pour permettre le positionnement vertical du demi-moule 14 par rapport au porte-moule 34.

Le dispositif de moulage 10 comporte des moyens de fixation 40 aptes à fixer de manière démontable au porte-moule 34 chaque demi-moule 14 occupant une position montée. Avantageusement, ces moyens de fixation sont aussi aptes à plaquer ou serrer le demi-moule 14 contre le fond 42 du logement associé du porte-moule 34 afin d'assurer qu'il ne reste pas une pellicule d'air susceptible d'isoler thermiquement le demi-moule 14 du porte-moule 34.

Par la suite, on décrit les moyens de fixation pour un seul porte-moule 34, les moyens de fixation étant identiques pour l'autre porte-moule 34.

Selon les enseignements de l'invention, les moyens de fixation sont des moyens commandés par attraction du demi-moule 14 contre le porte-moule 34. Par moyens d'attraction, on entend des moyens qui ne font pas intervenir de faces de blocage ou de serrage pour maintenir le demi-moule 14 serré dans sa position montée dans le logement 40 associé.

Selon un premier mode de réalisation de l'invention qui est représenté aux figures 6 à 9, les moyens de fixation sont des moyens d'aspiration par effet de ventouse.

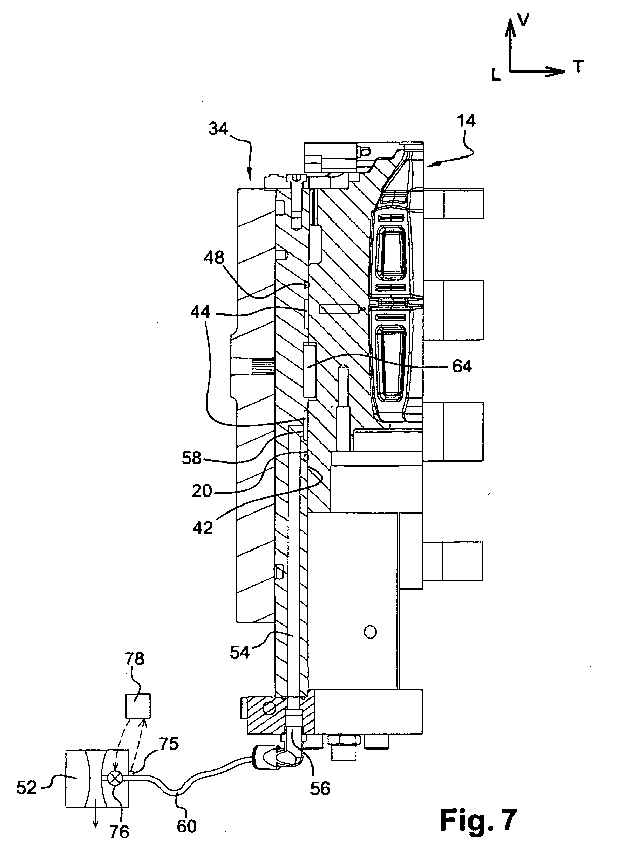

Les moyens de fixation comportent principalement une chambre 44 étanche à l'air qui est réservée à l'interface entre le porte-moule 34 et le demi-moule 14 en position montée sur le porte-moule 34, comme représenté à la figure 7. L'interface entre le porte-moule 34 et le demi-moule 14 est ici formée par le contact entre le fond 42 du logement 40, d'une part, et la face externe 20 du demi-moule 14, d'autre part. En d'autres termes, la chambre 44 étanche est interposée entre le porte-moule 34 et le demi-moule 14.

Comme cela sera expliqué par la suite, cette chambre 44 étanche est destinée à être soumise à une pression dite de fixation qui est inférieure à la pression atmosphérique afin de maintenir le demi-moule 14 plaqué dans son logement 40 par effet de ventouse.

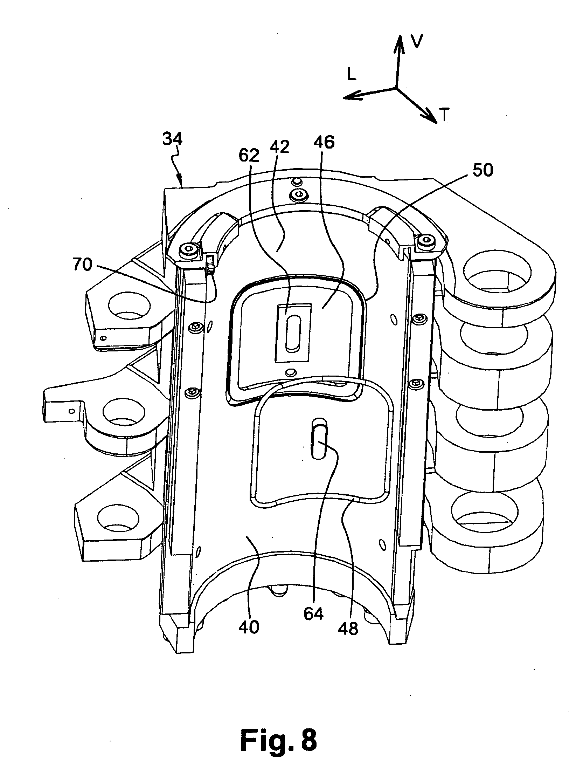

Comme représenté plus précisément à la figure 8, la chambre 44 étanche est ici formée en partie par une cavité 46 qui est réalisée dans le fond 42 du logement 40, verticalement au niveau du centre de gravité du demi-moule 14.

Lorsque le demi-moule 14 est en position montée, sa face externe 20 entre en contact avec le fond 42 du logement 40, fermant ainsi transversalement la cavité 46 pour former la chambre 44 étanche.

La cavité 46 présente ici un contour de forme rectangulaire avec des angles arrondis. On comprendra cependant que la cavité 46 pourra présenter un contour de forme différente.

La cavité 46 est avantageusement peu profonde afin que la chambre 44 étanche présente un volume réduit. En effet, l'intensité de la force d'aspiration ou d'attraction exercée par le vide est proportionnelle à l'aire délimitée par le contour de la chambre 44 étanche. La cavité 46 présente ici une profondeur constante de quelques millimètres par rapport au fond 42 du logement 40.

Selon une variante non représentée de l'invention, la chambre étanche est formée en partie par une cavité qui est réalisée dans la face externe du demi-moule. La chambre étanche est alors fermée par le fond du logement.

Selon encore une autre variante non représentée de l'invention, la chambre étanche est formée en partie par une cavité qui est réalisée dans le fond du moule, et en partie par une cavité qui est réalisée dans la face externe du demi-moule.

Comme représenté aux figures 7 et 8, l'étanchéité de la chambre 44 étanche est réalisée par un joint 48 continu qui entoure extérieurement le contour de la cavité 46.

Le joint 48 est ici porté par le porte-moule 34. A cet effet, il est reçu dans une gorge 50 annulaire qui est réalisée dans le fond 42 du logement 40 du porte-moule 34.

Le joint d'étanchéité 48 est ainsi destiné à être comprimé entre la face externe 20 du demi-moule 14 et le fond du logement pour conférer son étanchéité à la chambre 44 étanche.

Selon une variante non représentée de l'invention, le joint pourra aussi être porté par la face externe du demi-moule.

En outre, comme représenté à la figure 7, la chambre 44 étanche communique avec une source commandée de dépression 52 par l'intermédiaire d'une conduite d'aspiration 54 pour mettre la chambre 44 étanche à une pression inférieure à la pression atmosphérique. La source de dépression 52 est susceptible d'être commandée sélectivement entre un état activé dans lequel les moyens de fixation sont actifs et un état désactivé dans lequel les moyens de fixation sont inactifs.

La conduite d'aspiration 54 est ici réalisée dans l'épaisseur du porte-moule 34. Elle s'étend depuis un orifice de raccordement 56 à la source 52, ledit orifice de raccordement 56 étant agencé à la base inférieure du porte-moule 34, jusqu'à un orifice 58 qui débouche dans la chambre 44 étanche.

L'orifice de raccordement 56 comporte un moyen de connexion qui est destiné à être raccordé avec la source de dépression 52 par l'intermédiaire d'une conduite flexible 60. La conduite flexible 60 permet d'implanter la source de dépression 52 sur un support fixe par rapport au carrousel, par exemple la console 38, tandis que le porte-moule 34 est mobile.

Selon une variante non représentée de l'invention, la source de dépression est agencée directement sur le porte-moule.

La source de dépression 52 est par exemple formée par une pompe à effet Venturi qui a été représentée schématiquement à la figure 7. Cette pompe 52 comporte un tube de Venturi présentant un rétrécissement de section en son milieu. Le tube de Venturi est traversé par un débit d'air comprimé qui crée une dépression dans le rétrécissement. La conduite d'aspiration 54 est raccordée au tube de Venturi au niveau du rétrécissement pour permettre l'aspiration de l'air contenu dans la chambre 44 étanche.

La chambre 44 étanche étant vide lors de l'utilisation du dispositif 10, elle provoque une isolation locale entre le demi-moule 14 et le porte-moule 34.

Cependant, la régulation thermique du demi-moule 14 risque alors de ne plus être homogène.

Pour remédier à ce problème, la chambre 44 étanche présente ici une protubérance 62 centrale qui s'étend jusqu'à une face libre qui affleure à la surface du fond 42 du logement 40.

La face libre de la protubérance 62 est notamment destinée à permettre les échanges thermiques par conduction de manière globalement homogène entre le demi-moule 14 et le fond 42 du logement pour faciliter.

Selon une variante non représentée de l'invention, la chambre étanche comporte une pluralité de protubérance du type décrit au paragraphe précédent de manière à permettre un échange de chaleur encore plus homogène sur toute la face externe du demi-moule.

Selon encore une autre variante non représentée de l'invention, la chambre étanche est formée par au moins un sillon réalisé dans la face externe du demi-moule et/ou dans le fond du logement du porte-moule. Le sillon forme un réseau de circonvolutions susceptible de former une chambre étanche dont le contour délimite une aire adaptée tout en permettant de conserver des points de contact répartis de manière homogène entre le demi-moule et le fond du logement.

Avantageusement, le dispositif de moulage 10 comporte encore des moyens de positionnement intervenant, entre le porte-moule 34 et le demi-moule 14, par coopération de formes complémentaires telles que des nervures/gorges ou des méplats coopérant ensemble pour assurer notamment un positionnement selon la direction verticale, mais aussi autour de l'axe vertical "X" du demi-moule 14.

En effet, sans ces moyens de positionnement, la face externe 20 semi-cylindrique du demi-moule 14 serait susceptible de pivoter par rapport au logement 40 autour de l'axe vertical "X" lors de leur mise en position.

Les moyens de positionnement sont des moyens par emboîtement de formes de complémentaires entre le demi-moule 14 et le porte-moule 34 associés.

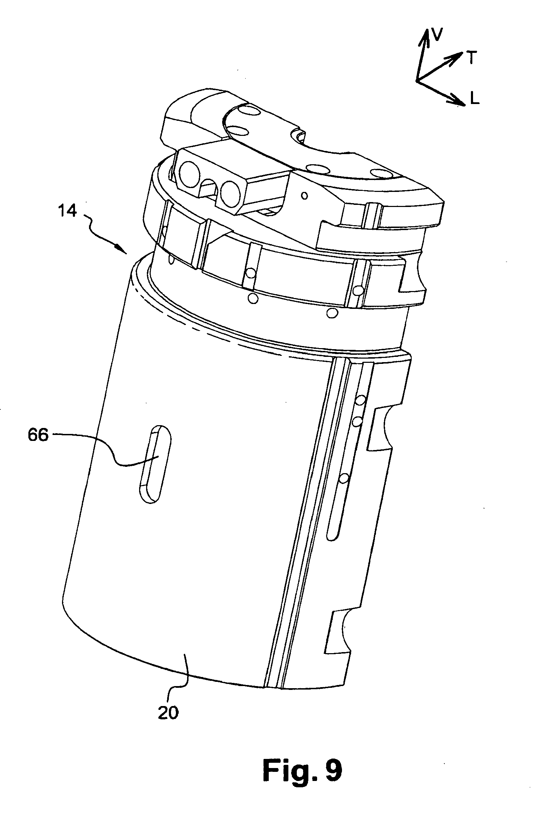

Plus particulièrement, comme représenté à la figure 8, le fond 42 du logement 40 est équipé d'une clavette 64 ou d'un pion de positionnement qui s'étend selon la direction transversale "F" de montage du demi-moule 14. Cette clavette de positionnement 64 est destinée à être reçue dans un orifice de positionnement 66 réalisé en vis-à-vis dans la face externe 20 du demi-moule 14, comme cela est représenté en détail à la figure 9.

La clavette 64 est ici agencée au centre de la face libre de la protubérance 62 du logement 40. Avantageusement, dans cet agencement, la clavette 64 est réalisée dans un matériau qui présente une conductibilité thermique élevée afin de favoriser les échanges thermiques entre le demi-moule 14 et le porte-moule 34.

Par ailleurs, pour éviter que le demi-moule 14 ne tombe lors de l'opération de montage du demi-moule 14 dans son logement 40, le demi-moule 14 est équipé de moyens d'accrochage mécanique au porte-moule 34 afin de permettre le maintien du demi-moule 14 sur le porte-moule 34 lors de l'arrêt des moyens commandés d'attraction, c'est-à-dire lorsque la pression de la chambre 44 étanche est supérieure ou égale à une pression de fixation du demi-moule 14.

Ces moyens d'accrochage ne sont pas des moyens de fixation du demi-moule 14 dans son logement 40 dans la mesure où ils ne permettent pas le serrage du demi-moule 14 contre le fond 42 du logement 40. Ils permettent seulement de retenir le demi-moule 14 dans son logement 40 en attendant sa fixation par effet de ventouse.

Les moyens de fixation par dépression sont aptes à fixer le demi-moule 14 contre le porte-moule 34 même en l'absence des moyens d'accrochage.

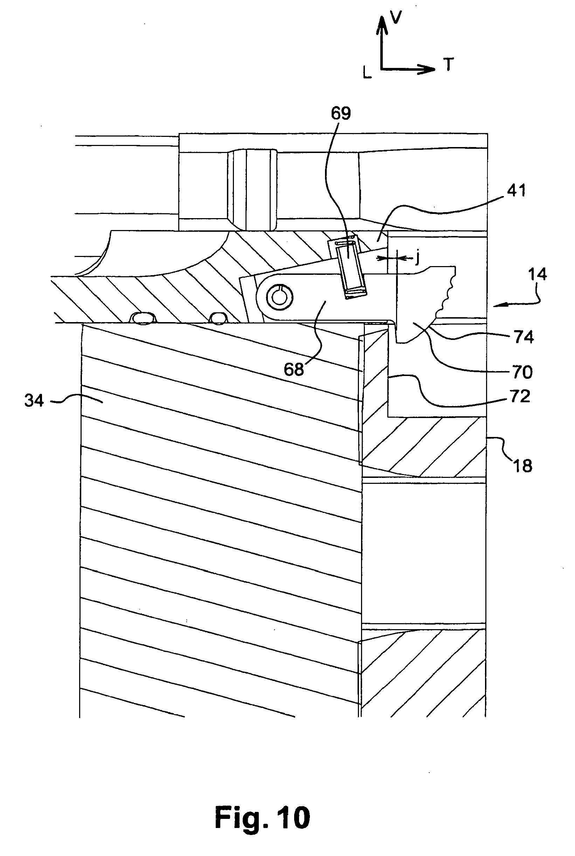

Comme représenté à la figure 10, les moyens d'accrochage comportent un loquet 68 qui est monté mobile dans le porte-moule 34. Le loquet 68 est ici agencé dans le rebord 41 supérieur du porte-moule 34 de manière que sa tête 70 libre en forme de crochet soit en saillie transversalement par rapport au bord du porte-moule 34.

Le loquet 68 est monté pivotant entre une position basse d'accrochage vers laquelle il est rappelé élastiquement par un ressort 69 et qui est représentée à la figure 10, et une position haute de libération (non représentée).

Dans sa position basse de blocage, la tête 70 du loquet 68 est susceptible de coopérer avec une face de blocage 72 portée par le demi-moule 14. La face de blocage 72 s'étend ici parallèlement à la face 18 de joint du demi-moule 14.

La tête 72 du loquet 70 comporte en outre une rampe 74 d'extrémité avant qui permet de commander automatiquement le loquet 70 vers sa position haute de libération lors de l'insertion du demi-moule 14 dans son logement 40 par contact avec une face du demi-moule 14.

Cette rampe 74 forme aussi une face d'appui qui permet à un opérateur d'appuyer vers le haut avec son doigt pour commander le loquet 70 vers sa position haute de libération lors du démontage du demi-moule 14.

Ainsi, lorsque le demi-moule 14 est dans sa position montée avant que les moyens de fixation de soient activés, il est maintenu dans sa position monté verticalement par la clavette 64, longitudinalement par la forme semi-cylindrique du fond 42 et transversalement par le loquet 68 dans sa position basse.

Selon une variante non représentée de l'invention, chaque porte-moule est équipé d'une pluralité de chambres étanches, par exemple deux, de dimensions réduites par rapport à celle qui est illustrée aux figures. Ceci permet d'obtenir plusieurs points d'ancrage. Avantageusement, au moins certaines de chambres étanches sont agencées à des endroits dans lesquels les échanges de chaleur entre le demi-moule et le porte-moule ne sont pas nécessaires, par exemple au-dessous du niveau de l'empreinte.

En outre, toujours selon cette variante, les chambres étanches peuvent être reliées à une pompe à vide commune ou à deux pompes à vides distinctes.

Lors du montage du demi-moule 14 sur le porte-moule 34 associé, l'alimentation en air comprimé du tube de Venturi est coupée. La source de dépression est ainsi désactivée.

Le demi-moule 14 est ensuite inséré en translation transversale vers le fond 42 du logement 40 selon sa direction de montage "F". Lors de cette insertion, le demi-moule 14 entre en contact avec la rampe d'extrémité du loquet 68, provoquant ainsi son déplacement vers sa position haute.

Lorsque le demi-moule 14 arrive en fond de logement 40 dans sa position montée, le loquet 68 est rappelé élastiquement vers sa position basse de blocage dans laquelle il retient transversalement le demi-moule 14 dans sa position montée en attendant sa fixation avec plaquage contre le fond 42 du logement 40.

Dans sa position montée, la face externe 20 du demi-moule 14 coopère avec le fond 42 du logement 40 pour fermer la cavité 46 afin de former la chambre 44 étanche. Le joint du logement 40 est comprimé par le demi-moule 14 pour assurer l'étanchéité de la chambre 44 étanche.

Puis, la pompe à effet Venturi 52 est activée. Les sources de dépression de tous les porte-moules 34 sont par exemple activées simultanément lorsque l'opérateur a fini d'équiper tous les dispositifs 10 de leur moule 12.

La pompe à effet Venturi 52 aspire alors l'air présent dans la chambre 44 étanche, provoquant ainsi un effet de ventouse qui permet de plaquer la face externe 20 du demi-moule 14 contre le fond du logement 40.

Ce plaquage permet de comprimer encore plus le joint, et d'augmenter ainsi l'étanchéité de la chambre 44 étanche.

Avantageusement, la dépression de la chambre étanche 44 crée une force d'attraction qui attire le demi-moule 14 transversalement contre le fond 42 du logement 40 du porte-moule 34. La force d'attraction s'exerce plus particulièrement sur la portion de la face externe 20 du demi-moule 14 qui ferme la chambre étanche 44.

Dans cet état, comme représenté à la figure 10, la tête 70 des moyens d'accrochage n'est plus en contact avec le demi-moule 14. Il subsiste un jeu transversal "j" entre la tête 70 et la face de blocage 72 du demi-moule 14. Seul l'effet de ventouse permet ainsi la fixation du demi-moule 14 dans le porte-moule 34.

Les dimensions de la chambre 44 étanche et la pression régnant dans la chambre 44 étanche lors du fonctionnement de la pompe à effet Venturi sont conçues de manière que la force d'attraction exercée par la dépression de la chambre 44 étanche soit suffisante pour maintenir le demi-moule 14 fixé pendant le fonctionnement du dispositif de soufflage, y compris lors des ouvertures et fermetures rapides et répétées des porte-moules 34 pour éjecter les récipients formés par soufflage.

La pompe à effet Venturi 52 comporte avantageusement des moyens 75 de mesure de la pression régnant dans la chambre 44 étanche et une vanne 76 de commande pour fermer de manière étanche la conduite d'aspiration 54, 60. La vanne 76 de commande est interposée entre les moyens de mesure de la pression 75.

Le dispositif 10 comporte en outre une unité électronique de commande 78 qui permet de commander la fermeture de la vanne 76 de commande ainsi que l'alimentation en air comprimé du tube de Venturi.

Les moyens de mesure de la pression 75 sont susceptibles de communiquer la pression mesurée à l'unité électronique de commande 78.

Lorsque la pression mesurée est inférieure ou égale à la pression de fixation, l'unité électronique de commande 78 commande la fermeture de la vanne 76 de commande et elle coupe l'alimentation en air comprimé du tube de Venturi. Ainsi, la chambre 44 étanche est maintenue à sa pression de fixation sans source d'énergie extérieure.

Si toutefois la pression régnant dans la chambre 44 étanche est mesurée comme étant supérieure à la pression de fixation, par exemple du fait de légères fuites d'air, l'unité électronique de commande 78 commande la réactivation de l'alimentation en air comprimé du tube de Venturi ainsi que l'ouverture de la vanne 76 de commande afin d'aspirer l'air contenu dans la chambre 44 étanche.

Lors du démontage du demi-moule 14, la chambre 44 étanche est mise à la pression atmosphérique, par exemple en désactivant la source de dépression et en ouvrant la vanne 76 de commande.

Avantageusement, le fonctionnement de la source de dépression 52 est susceptible d'être inversé afin de permettre la mise de la chambre 44 étanche à une pression supérieure à la pression atmosphérique.

En effet, lorsque le demi-moule 14 est resté plaqué plusieurs heures contre le fond du logement 40, on a constaté que le demi-moule 14 adhère fréquemment au porte-moule 34. Cette adhérence est susceptible de ralentir l'opération de démontage du demi-moule 14.

Pour inverser le fonctionnement de la pompe à effet Venturi 52 il est par exemple possible de souffler directement dans la conduite d'aspiration 54 l'air comprimé qui alimente normalement le tube de Venturi. Ceci peut être réalisé à l'aide d'une vanne trois voies (non représentée).

Le fait d'inverser le fonctionnement de la pompe à vide permet de créer une surpression dans la chambre 44 étanche. Cette surpression provoque le décollement du demi-moule 14. Lors de cette opération de décollement, il est très avantageux de disposer des moyens d'accrochage 68 décrits précédemment pour éviter que le demi-moule 14 ne soit projeté hors de son logement.

Les moyens de fixation par attraction réalisés selon l'invention permettent ainsi d'obtenir une fixation amovible du demi-moule sur le porte-moule qui ne comporte que peu de pièces mobiles. Ceci permet notamment de réduire fortement les coûts de production ainsi que le coût d'entretien en évitant l'usure de pièces mobiles.

En outre, ces moyens de fixation permettent une fixation rapide et très ergonomique des demi-moules 14 sur leur porte-moule 34.

## Revendications

1. Dispositif de moulage (10) pour une machine de fabrication de récipients, notamment des bouteilles, en matière thermoplastique par soufflage ou étirage-soufflage d'une préforme préalablement chauffée, le dispositif de moulage (10) comportant :
- deux demi-moules (14) dont chacun est pourvu d'une demi-empreinte (16) et dont chacun comporte une face (18) de joint et une face externe (20) ;
- deux porte-moules (34) dont chacun est muni d'un logement (40) destiné à recevoir un demi-moule (14) associé dans une position montée dans laquelle la face externe (20) du demi-moule (14) est en contact avec le fond (42) du logement (40) ; et
- des moyens de fixation (44, 52) aptes à fixer de manière démontable chaque demi-moule (14) dans le logement (40) du porte-moule (34) associé,
**caractérisé en ce que** les moyens de fixation (44, 52) sont des moyens commandés d'aspiration par effet de ventouse du demi-moule (14) contre le fond (42) du logement (40) du porte-moule (34).

2. Dispositif (10) selon la revendication précédente, **caractérisé en ce que** le demi-moule (14) est destiné à être monté et démonté de son logement par un mouvement de translation orthogonal à la face (18) de joint du demi-moule (14).

3. Dispositif (10) selon l'une quelconque des revendications précédentes, **caractérisé en ce qu'**au moins une chambre (44) étanche à l'air est réservée à l'interface entre le porte-moule (34) et le demi-moule (14) en position montée sur le porte-moule (34), et **en ce que** la chambre (44) étanche communique avec une source commandée de dépression (52) par l'intermédiaire d'une conduite d'aspiration (54) pour mettre la chambre (44) étanche à une pression de fixation inférieure à la pression atmosphérique.

4. Dispositif (10) selon la revendication précédente, **caractérisé en ce que** la chambre (44) étanche est formée en partie par une cavité qui est formée dans la face externe (20) du demi-moule (14).

5. Dispositif (10) selon l'une quelconque des revendications 3 ou 4, **caractérisé en ce que** la chambre (44) étanche est formée au moins en partie par une cavité (46) qui est formée dans le fond (42) du logement (40) du porte-moule (34).

6. Dispositif (10) selon l'une quelconque des revendications 3 à 5, **caractérisé en ce que** l'étanchéité de la chambre (44) étanche est réalisée par au moins un joint qui est porté par le demi-moule (14).

7. Dispositif selon l'une quelconque des revendications 3 à 6, **caractérisé en ce que** l'étanchéité de la chambre (44) étanche est réalisée par au moins un joint (48) qui est porté par le porte-moule (34).

8. Dispositif selon l'une quelconque des revendications précédentes, **caractérisé en ce que** le demi-moule (14) comporte des moyens de positionnement (64, 66) sur le porte-moule (34).

9. Dispositif (10) selon la revendication précédente, **caractérisé en ce que** les moyens de positionnement (64, 66) sont des moyens par emboîtement de formes de complémentaires entre le demi-moule (14) et le porte-moule (34) associés.

10. Dispositif selon l'une quelconque des revendications précédentes, **caractérisé en ce que** le demi-moule (14) est équipé de moyens (68) d'accrochage mécanique au porte-moule (34) afin de permettre le maintien du demi-moule (14) sur le porte-moule (34) lors de l'arrêt des moyens commandés de fixation (44, 52).

## Patentansprüche

1. Formgebungsvorrichtung (10) für eine Maschine zur Fertigung von Behältern, insbesondere Flaschen, aus thermoplastischem Material durch Blasen oder Streckblasen einer vorher erwärmten Vorform, wobei die Formgebungsvorrichtung (10) aufweist:
- zwei Formhälften (14), von denen jede mit einer Formhohlraumhälfte (16) versehen ist, und von denen jede eine Verbindungsseite (18) und eine Außenseite (20) aufweist;
- zwei Formträger (34), von denen jeder mit einer Aufnahme (40) versehen ist, die dazu bestimmt ist, eine zugeordnete Formhälfte (14) in einer montierten Stellung aufzunehmen, in der die Außenseite (20) der Formhälfte (14) mit dem Boden (42) der Aufnahme (40) in Kontakt ist; und
- Befestigungseinrichtungen (44, 52), die jede Formhälfte (14) in der Aufnahme (40) des zugeordneten Formträgers (34) entfernbar befestigen können,
**dadurch gekennzeichnet, dass** die Befestigungseinrichtungen (44, 52) gesteuerte Einrichtungen zur Ansaugung der Formhälfte (14) gegen den Boden (42) der Aufnahme (40) des Formträgers (34) durch Saugnapfwirkung sind.

2. Vorrichtung (10) nach dem vorhergehenden Anspruch, **dadurch gekennzeichnet, dass** die Formhälfte (14) dazu bestimmt ist, durch eine Translationsbewegung orthogonal zur Verbindungsseite (18) der Formhälfte (14) in ihre Aufnahme eingebaut und aus ihr ausgebaut zu werden.

3. Vorrichtung (10) nach einem der vorhergehenden Ansprüche, **dadurch gekennzeichnet, dass** mindestens eine luftdichte Kammer (44) an der Schnittstelle zwischen dem Formträger (34) und der Formhälfte (14) in der auf den Formträger (34) montierten Stellung ausgespart ist, und dass die dichte Kammer (44) mit einer gesteuerten Unterdruckquelle (52) über eine Saugleitung (54) in Verbindung steht, um die dichte Kammer (44) auf einen Befestigungsdruck niedriger als der Atmosphärendruck zu bringen.

4. Vorrichtung (10) nach dem vorhergehenden Anspruch, **dadurch gekennzeichnet, dass** die dichte Kammer (44) zum Teil von einem Hohlraum geformt wird, der in der Außenseite (20) der Formhälfte (14) geformt ist.

5. Vorrichtung (10) nach einem der Ansprüche 3 oder 4, **dadurch gekennzeichnet, dass** die dichte Kammer (44) zumindest zum Teil von einem Hohlraum (46) geformt wird, der im Boden (42) der Aufnahme (40) des Formträgers (34) geformt ist.

6. Vorrichtung (10) nach einem der Ansprüche 3 bis 5, **dadurch gekennzeichnet, dass** die Dichtheit der dichten Kammer (44) von mindestens einer Dichtung realisiert wird, die von der Formhälfte (14) getragen wird.

7. Vorrichtung nach einem der Ansprüche 3 bis 6, **dadurch gekennzeichnet, dass** die Dichtheit der dichten Kammer (44) von mindestens einer Dichtung (48) realisiert wird, die vom Formträger (34) getragen wird.

8. Vorrichtung nach einem der vorhergehenden Ansprüche, **dadurch gekennzeichnet, dass** die Formhälfte (14) Einrichtungen (64, 66) zur Positionierung auf dem Formträger (34) aufweist.

9. Vorrichtung (10) nach dem vorhergehenden Anspruch, **dadurch gekennzeichnet, dass** die Positioniereinrichtungen (64, 66) Einrichtungen durch Ineinanderfügen komplementärer Formen zwischen der Formhälfte (14) und dem zugeordneten Formträger (34) sind.

10. Vorrichtung nach einem der vorhergehenden Ansprüche, **dadurch gekennzeichnet, dass** die Formhälfte (14) mit Einrichtungen (68) zum mechanischen Festhaken am Formträger (34) ausgestattet ist, um den Halt der Formhälfte (14) auf dem Formträger (34) beim Anhalten der gesteuerten Befestigungseinrichtungen (44, 52) zu erlauben.

## Claims

1. Molding device (10) for a machine for producing chambers, notably bottles, in thermoplastic material by blowing or drawing-blowing a pre-heated preform, the molding device (10) including:
- two half-molds (14) each of which is provided with a half-imprint (16) and each of which includes a joint face (18) and an external face (20);
- two mold-carriers (34) each of which is provided with a recess (40) intended to receive an associated half-mold (14) in a mounted position in which the external face (20) of the half-mold (14) is in contact with the bottom (42) of the recess (40); and
- fixing means (44, 52) adapted to fix each half-mold (14) demountably in the recess (40) of the associated mold-carrier (34),
**characterized in that** the fixing means (44, 52) are controlled means for aspiration by the sucker effect of the half-mold (14) against the bottom (42) of the recess (40) of the mold-carrier (34).

2. Device (10) according to the preceding claim, **characterized in that** the half-mold (14) is adapted to be mounted in and demounted from its recess by a movement in translation orthogonal to the joint face (18) of the half-mold (14).

3. Device (10) according to either of the preceding claims, **characterized in that** at least one airtight chamber (44) is reserved at the interface between the mold-carrier (34) and the half-mold (14) in the position mounted on the mold-carrier (34), and **in that** the airtight chamber (44) communicates with a vacuum source (52) via an aspiration conduit (54) to enable establishing in the airtight chamber (44) of a fixing pressure less than atmospheric pressure.

4. Device (10) according to the preceding claim, **characterized in that** the airtight chamber (44) is formed in part by a cavity that is formed in the external face (20) of the half-mold (14).

5. Device (10) according to either of claims 3 or 4, **characterized in that** the airtight chamber (44) is formed at least in part by a cavity (46) that is formed in the bottom (42) of the recess (40) in the mold-carrier (34).

6. Device (10) according to any one of claims 3 to 5, **characterized in that** the airtight chamber (44) is sealed by at least one seal that is carried by the half-mold (14).

7. Device according to any one of claims 3 to 6, **characterized in that** the airtight chamber (44) is sealed by at least one seal (48) that is carried by the mold-carrier (34).

8. Device according to any one of the preceding claims, **characterized in that** the half-mold (14) includes means (64, 66) for positioning it on the mold-carrier (34).

9. Device (10) according to the preceding claim, **characterized in that** the positioning means (64, 66) are means operative via nesting of complementary shapes between the associated half-mold (14) and the associated mold-carrier (34).

10. Device according to any one of the preceding claims, **characterized in that** the half-mold (14) is equipped with means (68) for mechanically attaching it to the mold-carrier (34) in order to enable retention of the half-mold (14) on the mold-carrier (34) on stopping the controlled fixing means (44, 52).
